Europäisches Patentamt

European Patent Office

Office européen des brevets

(19)

(11) **EP 0 798 569 B1**

(12) **EUROPEAN PATENT SPECIFICATION**

(45) Date of publication and mention
of the grant of the patent:
**27.10.1999 Bulletin 1999/43**

(51) Int Cl.⁶: **G01S 7/52**, G01S 15/89,
G01N 29/04

(21) Application number: **97105305.3**

(22) Date of filing: **27.03.1997**

(54) **Connected region extracting method and apparatus of B scope image**

Verfahren und Vorrichtung zum Extrahieren von Anschlussbereichen im B-Leuchtschirmbild

Méthode et dispositif d'extraction des regions de connexion dans une image b d'oscilloscope

(84) Designated Contracting States:
**AT CH DE LI**

(30) Priority: **29.03.1996 JP 7550196**

(43) Date of publication of application:
**01.10.1997 Bulletin 1997/40**

(73) Proprietor: **TOKIMEC Inc.**
**Tokyo 144 (JP)**

(72) Inventors:
• **Ozawa, Kingo**
  **Ohta-ku, Tokyo 144 (JP)**

• **Doh, Michihisa**
  **Ohta-ku, Tokyo 144 (JP)**

(74) Representative:
**Schmidt-Evers, Jürgen, Dipl.-Ing. et al**
**Patentanwälte Mitscherlich & Partner,**
**Sonnenstrasse 33**
**80331 München (DE)**

(56) References cited:
**WO-A-82/02781**         **WO-A-91/17517**
**JP-A- 4 166 760**        **US-A- 4 332 016**
**US-A- 4 554 834**        **US-A- 4 945 766**
**US-A- 5 214 744**        **US-A- 5 476 096**

# Description

## BACKGROUND OF THE INVENTION

The invention relates to method and apparatus for processing a B scope image of a reflection echo such as an ultrasonic wave or the like. More particularly, the invention relates to connected region extracting method and apparatus of a B scope image for extracting a connected region of a B scope image of a reflection echo of an ultrasonic wave when, for example, a flaw of a rail of a railroad is discriminated by applying the method and apparatus of the invention to a rail flaw discriminating apparatus or the like in an ultrasonic rail flaw detecting vehicle.

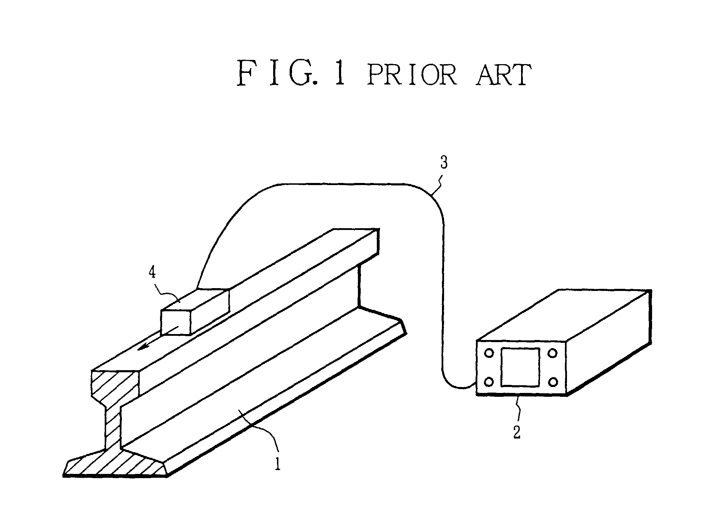

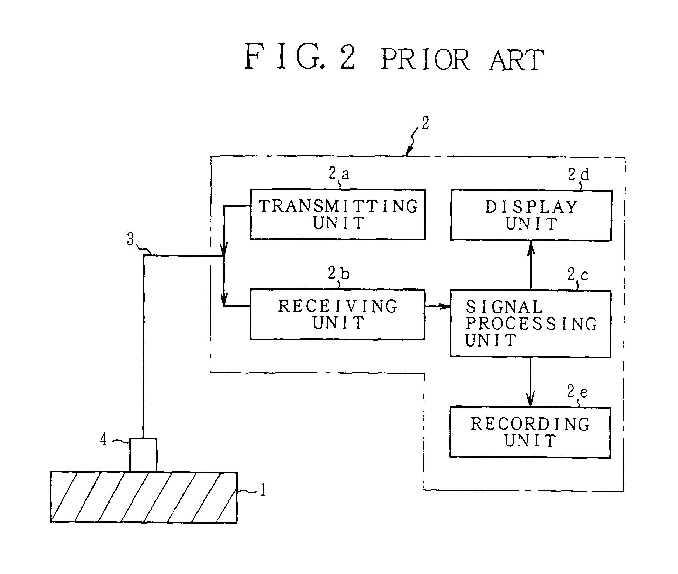

Fig. 1 is a perspective view of a measuring state when a flaw of a rail (material to be examined) of a conventional railroad or the like is detected by an ultrasonic wave. Fig. 2 is a block diagram of a construction of the apparatus. In Figs. 1 and 2, in the example, an ultrasonic probe 4 provided at a front edge of a cable 3 which is connected to an ultrasonic flaw detecting apparatus 2 is moved to a rail (material to be examined) 1 as a target of flaw detection, thereby detecting a flaw of the rail 1. In this instance, a transmission signal which is generated from a transmitting unit 2a in Fig. 2 at a predetermined period is inputted to the ultrasonic probe 4. An ultrasonic pulse from an internal oscillator (not shown) is radiated to the rail 1. The ultrasonic pulse is reflected by a flaw or the like of the rail 1. A reflection wave is received by the oscillator of the ultrasonic probe 4. A reception wave signal is supplied to a receiving unit 2b, by which an amplification or the like is performed. The resultant signal is extracted through a gate circuit of a signal processing unit 2c. Further, a digital signal forming process is executed in the signal processing unit 2c and a level of the reception signal is compared with a discrimination level, thereby detecting a flaw in the rail 1. Flaw data is displayed on a screen by a display unit 2d such as a cathode ray tube (CRT) or the like together with position information of the rail 1 based on a movement amount from a running distance sensor (not shown). Flaw detection information such as flaw waveform which is outputted from the signal processing unit 2c, position of the rail 1, and the like is stored and preserved in a memory such as a recording unit 2e or the like and is further printed on a recording paper as necessary and is analyzed.

In such a measurement, various processes are executed to a B scope image of a reflection echo such as an ultrasonic wave or the like in accordance with a purpose. As one of the processes, an extraction of a connected region, namely, a process to extract a set of pixels of reflection echoes mutually having a connecting relation on the B scope image as one connected region is executed. The process to extract the connected region is used for, for example, a discrimination about a flaw in a rail in an ultrasonic rail flaw detecting vehicle.

The extracting process can be executed by using an image processing method called a labelling. An example of the labelling has been disclosed in Tamura, "An Introduction to Computer Image Process", Soken Publishing Ltd., 1985). A process to allocate a label (number) to each connected region is executed.

In such a conventional labelling image process, however, its processing time is very long and in a discrimination of a flaw in a rail in the ultrasonic rail flaw detecting vehicle, there is a drawback such that it is difficult to realize a high speed and a flaw cannot be discriminated in a real-time manner. When a dropout of data of the reflection echo occurs, a connecting relation of a pixel with the reflection echo is broken. In this case, even if a slight data dropout occurs, a process while regarding one connected region is carried out. Such a process, however, is difficult in the labelling image process.

US-A-4 945 766 discloses a device in which reflected sound waves are used to inspect valve assemblies and data representing about the same reflection time of flight are grouped together as features. When no reflection is received, the data is indicated in a fall out region of the image assumed to identify spaces between the elements.

## SUMMARY OF THE INVENTION

The invention intends to solve the conventional problems as mentioned above and it is an object of the invention to provide connected region extracting method and apparatus of a B scope image, in which a speed when extracting a connected region of the B scope image of a reflection echo is raised, a data dropout of the reflection echo can be permitted as necessary, a speed when discriminating a flaw in a rail in an ultrasonic rail flaw detecting vehicle or the like is raised, and the rail flaw can be accurately discriminated.

According to the invention, there is provided a connected region extracting method of a B scope image for extracting a connected region from the B scope image of a reflection echo obtained by radiating a pulse energy such as ultrasonic wave, microwave, millimeter wave, or the like, wherein the method is characterized by executing the following processes.

    a. Each time the reflection echo is detected, a position on the B scope image of the detected reflection echo is calculated.

    b. When a condition such that a distance between the position on the B scope image of the detected reflection echo and the position on the B scope image of the reflection echo to which an allocation number which had already been used was finally allocated lies within a predetermined range is satisfied, the allocation number which has already been used is allocated to the detected reflection echo.

c. By the above condition, when the allocation number which has already been used is not allocated to the detected reflection echo, an unused allocation number is allocated to the detected reflection echo.

According to the invention, there is provided a connected region extracting apparatus of a B scope image, wherein a connected region is extracted from the B scope image of a reflection echo obtained by radiating an ultrasonic pulse to a material to be examined, an ultrasonic transmitting and receiving unit radiates the ultrasonic pulse to the material to be examined and outputs received reception data, and each time the reflection echo is detected by the ultrasonic transmitting and receiving unit, a calculating unit calculates the position on the B scope image of the detected reflection echo. Further, when a condition such that a distance between the position on the B scope image of the reflection echo which was calculated by the calculating unit and the position on the B scope image of the reflection echo to which an allocation number which had already been used was finally allocated lies within a predetermined range is satisfied, a first number allocating unit allocates the allocation number which has already been used to the detected reflection echo. When the allocation number is not allocated by the first number allocating unit, a second number allocating unit allocates the unused allocation number to the detected reflection echo. The material to be examined is, for example, a rail. The method and apparatus of the invention are applied to, for example, a rail flaw discriminating apparatus in an ultrasonic rail flaw detecting vehicle.

In such connected region extracting method and apparatus of the B scope image of the invention as mentioned above, the connected region on the B scope image of the reflection echo corresponds to a continuous reflection source. Therefore, the reflection echo as a connected region on the B scope image is continuously detected in accordance with a scan of an ultrasonic probe. There is mutually a connecting relation between the reflection echoes in which the detecting order continues even on the B scope image. Therefore, when the reflection echo is detected, whether the detected reflection echo belongs to the connected region on the B scope image which has already existed or not can be discriminated by a connecting relation on the B scope image between the detected reflection echo and the reflection echo which was finally detected as a reflection echo belonging to the connected region. By executing the above discrimination every detection of the reflection echo, the connected region on the B scope image is extracted and a different allocation number is allocated to each connected region. In this case, it is necessary to scan the whole B scope image including the pixel having no reflection echo in the conventional labelling process. According to the extracting process of the connected region here, it is equivalent to the process for only the pixel having the reflection echo as a target. Moreover, since the processing contents are simple, a processing speed which is a few times to tens of times higher than the speed in the conventional labelling process can be realized.

On the other hand, since the connectivity discrimination is made under a condition that the distance on the B scope image lies within the predetermined range, the connecting condition can be easily changed. By lightening the condition by widening the predetermined range, even if a slight breakage of data occurs, such a data region can be regarded as one connected region. Therefore, a speed when extracting the connected region of the B scope image of the reflection echo is raised and the data dropout of the reflection echo can be permitted as necessary. Thus, for example, a speed when discriminating a flaw in a rail in the ultrasonic rail flaw detecting vehicle can be raised and the rail flaw can be accurately discriminated.

The above and other objects, features, and advantages of the present invention will become more apparent from the following detailed description with reference to the drawings.

BRIEF DESCRIPTION OF THE DRAWINGS

Fig. 1 is a perspective view of a conventional measuring state when a flaw in a rail of a railroad is detected by an ultrasonic wave;

Fig. 2 is a block diagram of a construction of a conventional apparatus;

Fig. 3 is a block diagram of an embodiment of a connected region extracting apparatus of a B scope image according to the invention;

Fig. 4 is a block diagram of a detailed construction of the B scope image processing apparatus and a display apparatus in Fig. 3;

Fig. 5 is a block diagram of a function for extracting a connected region according to the B scope image processing apparatus in Fig. 3;

Fig. 6 is a flowchart for a processing procedure of the connected region extracting operation of the B scope image according to the B scope image processing apparatus in Fig. 3;

Fig. 7 is an explanatory diagram for extraction of a connected region of the B scope image according to the invention; and

Fig. 8 is an explanatory diagram of an extraction result of the connected region according to the invention.

DETAILED DESCRIPTION OF THE PREFERRED EMBODIMENT

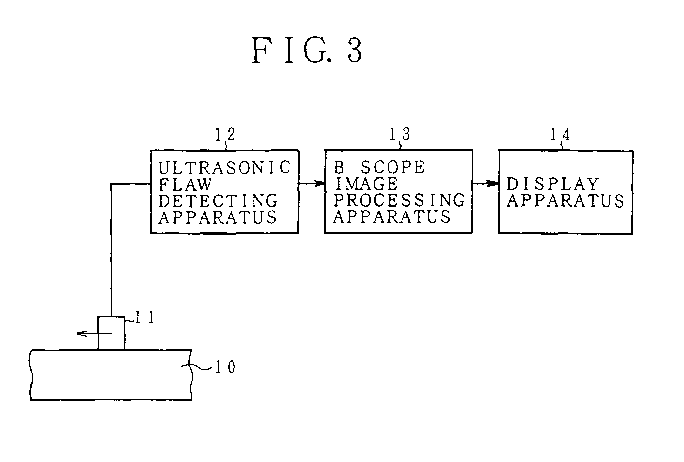

Fig. 3 is a block diagram showing a construction of an embodiment of a connected region extracting apparatus of a B scope image of the invention. In Fig. 3, the embodiment is applied to a rail flaw discriminating apparatus which is installed in an ultrasonic rail flaw detecting vehicle which runs at a high speed. An ultrasonic probe 11 moves on a rail 10 as a target of an examination in a contact state. Further, in the embodiment, an ultrasonic flaw detecting apparatus 12 for transmitting a transmission signal to the ultrasonic probe 11 and executing a receiving process such as amplification of a reflection signal of a reflection echo received by the ultrasonic probe 11, conversion into a digital signal, and the like is provided. The ultrasonic flaw detecting apparatus 12 has a transmitting unit (not shown) for transmitting a transmission signal and a receiving unit for executing a receiving process such as amplification of the reflection signal of the reflection echo, conversion into a digital signal, and the like. A B scope image processing apparatus 13 for forming a B scope image from the reception data which is outputted from the ultrasonic flaw detecting apparatus 12 and extracting a connected region and a display apparatus 14 for displaying the processing data onto a screen are provided.

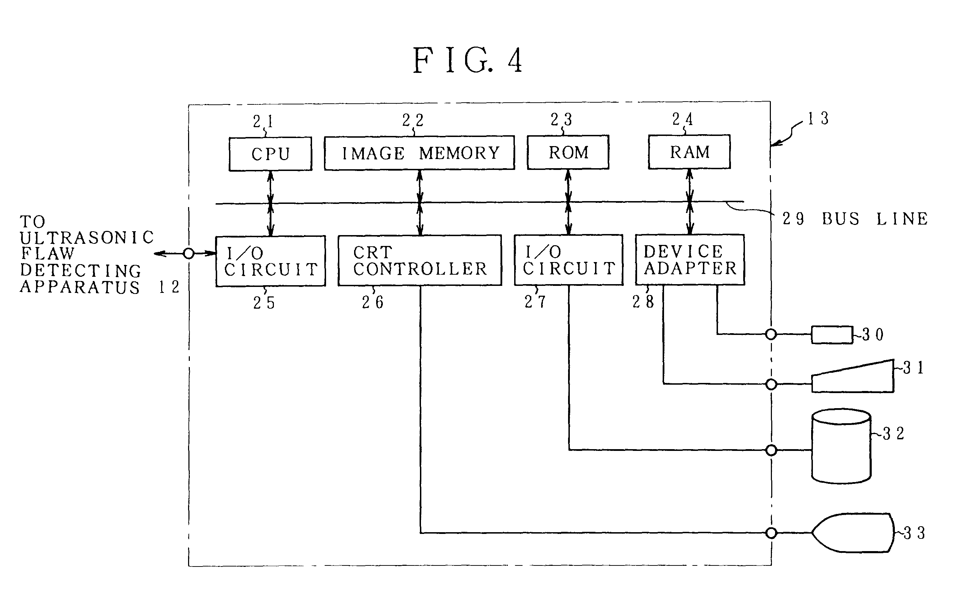

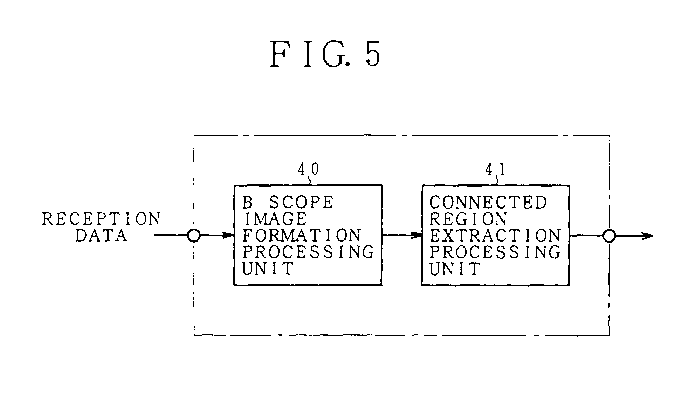

Fig. 4 is a block diagram of a detailed construction of the B scope image processing apparatus 13 and display apparatus 14 in Fig. 3. In Fig. 4, the B scope image processing apparatus 13 has: a CPU 21 to control the apparatus; an image memory 22 for storing B scope image data formed by the CPU 21; an ROM 23 for storing a control program; and an RAM 24 for working. The B scope image processing apparatus 13 also has: an I/O circuit 25 to fetch reception data which is outputted from the ultrasonic flaw detecting apparatus 12; a CRT controller 26 for controlling a display on a screen; and an I/O circuit 27 to transmit or receive storage data to/from an external storage medium. A device adapter 28 to connect devices, a bus line 29 to which each unit is connected, and a mouse 30 to perform an inputting operation of coordinates are provided. Further, a keyboard 31 to perform an inputting operation for a function selection or the like, an external storage device 32 for storing processing data through the I/O circuit 27 and transmitting storage data, and a CRT monitor 33 to display the processing data onto the screen are provided. Fig. 5 is a block diagram of a function for a connected region extraction of the B scope image which is processed by the CPU 21 in the B scope image processing apparatus 13 in Fig. 3. In Fig. 5, the function for the connected region extraction comprises a B scope image formation processing unit 40 to form a B scope image and a connected region extraction processing unit 41 for processing the extraction of a connected region. When a flaw in a rail is discriminated on the basis of the extraction data of the connected region in the B scope image processing apparatus 13, for example, a flaw discriminating process is executed after, for example, a feature extracting process, a delay echo discriminating process, an artificial structure discriminating process, and the like were executed.

The operation in the construction of the embodiment will now be described. The connected region extracting apparatus in Fig. 3 is applied to a rail flaw discriminating apparatus or the like which is installed in the ultrasonic rail flaw detecting vehicle which runs at a high speed. An ultrasonic pulse is radiated from the ultrasonic probe 11 to the rail 10 and its reflection echo is received. An ultrasonic signal from the ultrasonic flaw detecting apparatus 12 is inputted to the ultrasonic probe 11. The receiving unit of the ultrasonic flaw detecting apparatus 12 executes a receiving process such as amplification of the reflection signal of the reflection echo received by the ultrasonic probe 11, conversion into a digital signal, and the like and outputs the resultant signal to the B scope image processing apparatus 13. In the B scope image processing apparatus 13 in Fig. 4, the CPU 21 fetches the data through the I/O circuit 25 and bus line 29 and executes a data process by the connected region extracting function in Fig. 5 on the basis of the control program read out from the ROM 23. Namely, in the B scope image processing apparatus 13, a B scope image of the reflection echo is formed from the reception data fetched from the ultrasonic flaw detecting apparatus 12 and the connected region is extracted from the B scope image at a high speed and a high precision. The processing data is temporarily stored into the working RAM 24 and is displayed on the screen by the CRT monitor 33. Further, the processing data is stored into the external storage device 32 through the I/O circuit 27. An instructing operation of those processes is performed by the mouse 30 and keyboard 31 connected to the device adapter 28.

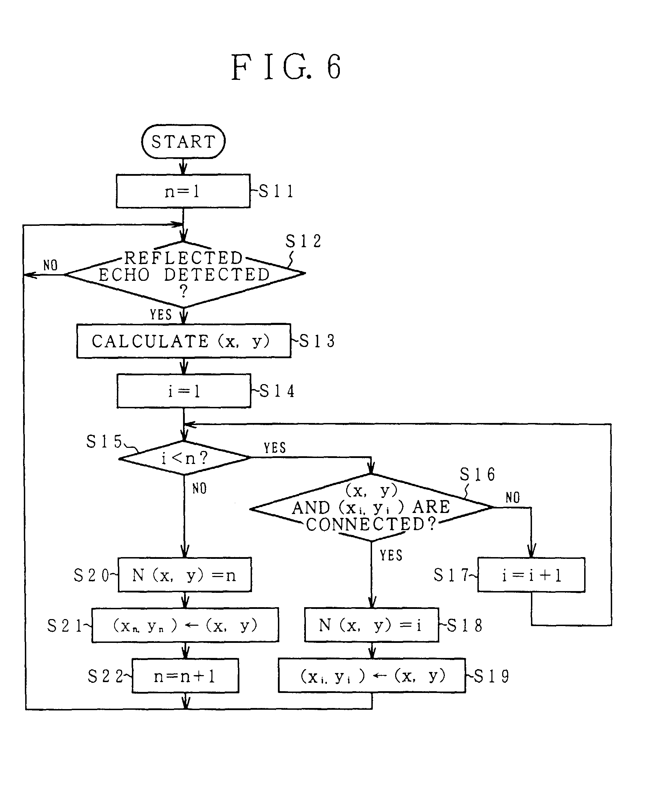

Fig. 6 is a flowchart for a processing procedure of the connected region extracting operation of a B scope image by the function in Fig. 5. In Fig. 6, n denotes an unused allocation number which is subsequently used. (x, y) indicates a position on the B scope image of the detected reflection echo. $(x_i, y_i)$ and $(x_n, y_n)$ indicate positions on the B scope image of the reflection echo to which allocation numbers i and n were finally allocated, respectively. Further, N(x, y) denotes an allocation number allocated to the position (x, y) on the B scope image.

In the B scope image processing apparatus 13, in step S11, the unused allocation number n which is subsequently used is set to "1" at a time point to start the process and the following processes are repeated. First in step S12, when the reflection echo is detected, the position (x, y) on the B scope image is calculated in step S13. The B scope image is an image in which an incident position of an ultrasonic pulse and a beam path distance (propagating time) are set to, for instance, an axis of abscissa and an axis of ordinate, respectively. Therefore, they are calculated as x = a • (incident position) and y = b • (beam path distance). a and b are constants. In steps S14, S15, and S17, allocation numbers (1 to n-1 and the allocation number used doesn't exist when n = 1) which have already been used are set to targets. In step S16, a check is made to see if there is a connecting relation between the position (x, y) on the B scope image of the detected reflection echo and the position $(x_i, y_i)$ on the B scope image of the reflection echo to which the allocation number i was finally allocated. As a discriminating condition about the connecting relation, for instance, any one of the following expressions (1), (2), and (3) can be used. p, q, r, and s denote predetermined values and max{$\alpha$, $\beta$} denotes a not-smaller one of $\alpha$ and $\beta$.

$$\{(x - x_i)^2 + (y - y_i)^2\}^{1/2} \leqq p \qquad (1)$$

$$\max(|x - x_i|, |y - y_i|) \leqq q \qquad (2)$$

$$|x - x_i| \leqq r \text{ and } |y - y_i| \leqq s \qquad (3)$$

When it is determined that there is the connecting relation, the allocation number i is allocated to the position (x, y) on the B scope image in step S18. The position $(x_i, y_i)$ is replaced to the position (x, y) in step S19. In step S20, when the allocation number i in which there is the connecting relation between the position (x, y) and the position $(x_i, y_i)$ doesn't exist, the new allocation number n is allocated to the position (x, y) on the B scope image. In step S21, the position $(x_n, y_n)$ is set to the position (x, y). In step S22, the value of the unused allocation number n which is subsequently used is increased by "1". By repeating the above processes, the different allocation number is allocated to each connected region and the connected region is extracted.

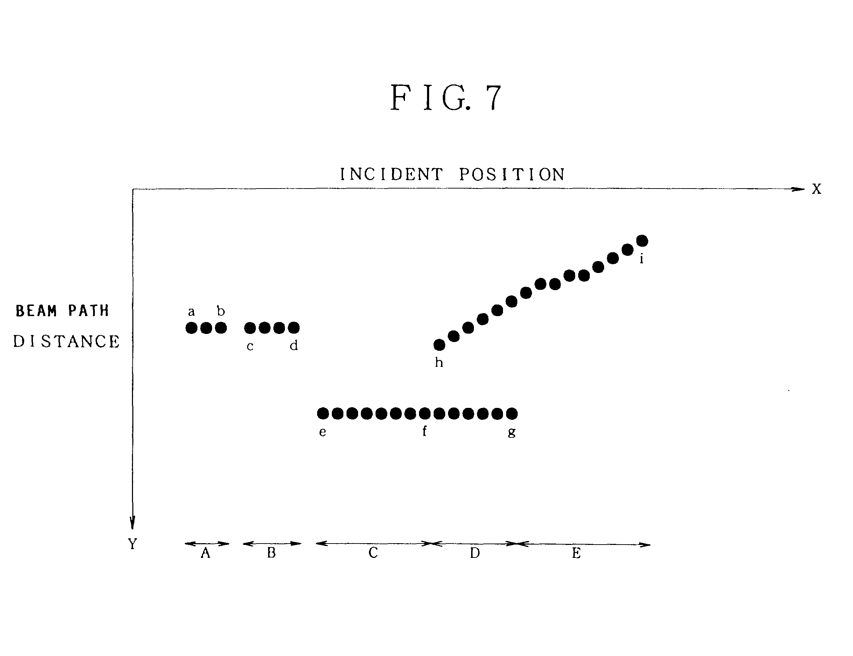

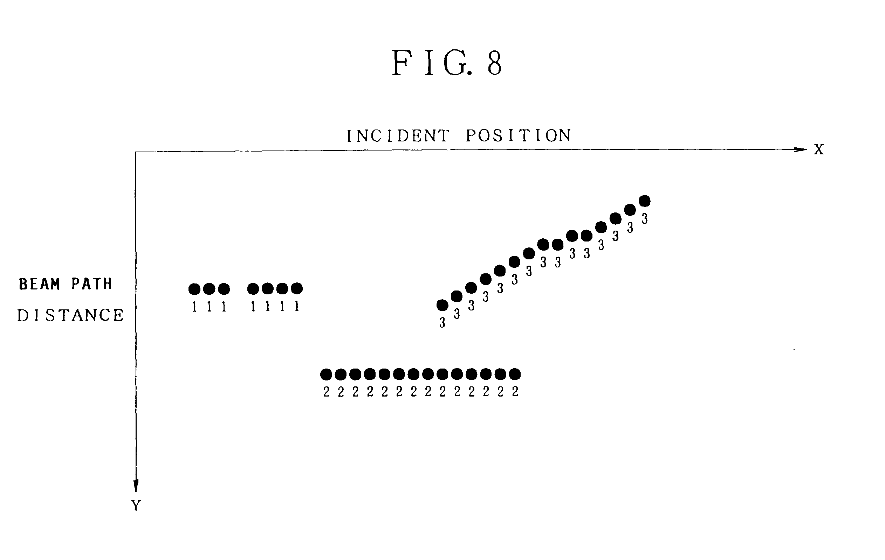

The extraction of the connected region will now be specifically explained hereinbelow. Fig. 7 is a diagram for explaining the extraction of the connected region of the B scope image. Fig. 8 is a diagram for explaining the extraction result of the connected region. In Figs. 7 and 8, when the incident position of the ultrasonic pulse to the rail 10 is moved in the X direction, the reflection echo that is first detected is at point (a) in Fig. 7 and the allocation number 1 is allocated as shown in Fig. 8. In a subsequent range (A), the reflection echo is detected by an almost constant beam path distance. Each time the reflection echo is detected, the allocation number 1 is allocated and the reflection echo reaches point (b). After the reflection echo dropped out between ranges A and B, the reflection echo is again obtained in the range B in Fig. 7 by a beam path distance similar to that in the range A. In this instance, a distance between points (b) and (c) is short and it is decided that there is the connecting relation. The allocation number 1 is also allocated to point (c) as shown in Fig. 8. Thus, the allocation number 1 is allocated from point (a) to point (b) and from point (c) to point (d) and this region is extracted as one connected region.

Subsequently, the reflection echo at point (e) in a range C in Fig. 7 is detected. However, point (e) is not connected to last point (d) of the allocation number 1. Therefore, the allocation number 2 is allocated as shown in Fig. 8. After that, the reflection echo on an almost constant beam path distance in the range C in Fig. 7 is detected and the allocation number 2 is allocated up to point (f). When the incident position enters a range D, the reflection echo is also detected in another beam path distance. The reflection echo at point (h) is first detected. Point (h) is not connected to last point (f) of the allocation number 2. Therefore, the allocation number 3 is newly allocated as shown in Fig. 8.

After that, the allocation number 2 or 3 is allocated in accordance with the connecting relation to two reflection echoes which are detected at the same incident point in the range D. As for the reflection echo to which the allocation number 3 is allocated, the beam path distance also continuously changes as shown in Fig. 7 in association with the movement of the incident position of the ultrasonic wave. However, the connecting relation is matched. Thus, the allocation number 2 is allocated from point (e) to point (f) and from point (f) to point (g). Further, the reflection echo to which the allocation number 3 is allocated continues to the incident position of a range E. The allocation number 3 is allocated from point (h) to point (i). By performing the allocation as mentioned above, the extraction result of the connected region shown in Fig. 8 is consequently obtained.

According to the connected region extracting method and apparatus of the B scope image of the invention as mentioned above, the extracting speed of the connected region of the B scope image of the reflection echo is raised and the data dropout of the reflection echo can be permitted as necessary. Therefore, for example, a discriminating speed of the flaw in rail in the ultrasonic rail flaw detecting vehicle is raised, the real-time process can be performed, and the discrimination can be accurately performed.

Although the above embodiment has been described with respect to the example of the connected region extracting method of the ultrasonic flaw detecting apparatus to obtain the B scope image of the reflection echo by radiating the ultrasonic pulse, the invention can be also applied as it is to another apparatus such as a collision preventing apparatus of a vehicle using a radar using a microwave, an underground radar, or a millimeter wave radar, or the like.

## Claims

1.    A connected region extracting method of a B scope image for extracting a connected region from the B scope image of a reflection echo obtained by radiating a pulse energy such as ultrasonic wave, microwave, millimeter wave, or the like, comprising the steps of:

calculating a position (x, y) on the B scope image of said detected reflection echo only when the reflection echo is detected;

when a condition such that a distance between the position (x, y) on the B scope image of said detected reflection echo and a position $(x_i, y_i)$ on the B scope image of the reflection echo to which an allocation number (i) which had already been used was finally allocated lies within a predetermined range is satisfied, allocating said allocation number (i) which has already been used to said detected reflection echo; and

when said allocation number (i) which has already been used is not allocated to said detected reflection echo in accordance with said condition, an unused allocation number (n) is allocated to said detected reflection echo.

2. A method according to claim 1, wherein said reflection echo is a reflection echo obtained by radiating the ultrasonic pulse to a material (10) to be examined.

3. A method according to claim 2, wherein said material (10) to be examined is a rail.

4. A method according to claim 2, wherein said method is applied to a rail flaw discriminating apparatus in an ultrasonic rail flaw detecting vehicle.

5. A connected region extracting apparatus of a B scope image for extracting a connected region from the B scope image of a reflection echo obtained by radiating an ultrasonic pulse to a material (10) to be examined, comprising:

an ultrasonic transmitting and receiving unit (12) for radiating the ultrasonic pulse to the material (10) to be examined and outputting received reception data;

a calculating unit (13) for, only when a reflection echo is detected by said ultrasonic transmitting and receiving unit, calculating a position (x, y) on the B scope image of said detected reflection echo;

a first number allocating unit (13) for, when a condition such that a distance between the position (x, y) on the B scope image of said reflection echo calculated by said calculating unit and a position $(x_i, y_i)$ on the B scope image of a reflection echo to which an allocation number (i) which had already been used was finally allocated lies within a predetermined range is satisfied, allocating said allocation number (i) which has already been used to said detected reflection echo; and

a second number allocating unit (13) for allocating an unused allocation number (n) to said detected reflection echo when the allocation number (i) is not allocated by said first number allocating unit.

6. An apparatus according to claim 5, wherein said material (10) to be examined is a rail.

7. An apparatus according to claim 5, wherein said apparatus is applied to a rail flaw discriminating apparatus in an ultrasonic rail flaw detecting vehicle.

**Patentansprüche**

1. Verfahren zum Herauslesen von zusammenhängenden Bereichen eines B-Leuchtschirmbildes, zum Herauslesen eines zusammenhängenden Bereiches aus dem B-Leuchtschirmbild eines Reflexionsechos, das durch Ausstrahlen eines Energieimpulses, wie einer Ultraschallwelle, Mikrowelle, Millimeterwelle oder dergleichen, erhalten wurde, mit den Verfahrensschritten:

Berechnen einer Position (x, y) auf dem B-Leuchtschirmbild des erfassten Reflexionsechos, nur wenn das Reflexionsecho erfasst wird;

falls eine Bedingung derart, daß ein Abstand zwischen der Position (x, y) auf dem B-Leuchtschirmbild des erfassten Reflexionsechos und einer Position $(x_i, y_i)$ auf dem B-Leuchtschirmbild des Reflexionsechos, der schließlich eine Zuordnungsnummer (i), die bereits verwendet worden ist, zugeordnet wurde, innerhalb eines vorbestimmten Bereichs liegt, erfüllt ist, Zuordnen der Zuordnungsnummer (i), die bereits verwendet worden ist, zu dem erfassten Reflexionsecho; und

falls die Zuordnungsnummer (i), die bereits verwendet worden ist, nicht dem erfassten Reflexionsecho gemäß der obigen Bedingung zugeordnet wurde, Zuordnen einer unbenutzten Zuordnungsnummer (n) zu dem erfassten Reflexionsecho.

2. Verfahren nach Anspruch 1, dadurch gekennzeichnet, daß das Reflexionsecho ein Reflexionsecho ist, welches durch Ausstrahlen des Ultraschallimpulses auf ein zu untersuchendes Material (10) erhalten wurde.

3. Verfahren nach Anspruch 2, dadurch gekennzeichnet, daß das zu untersuchende Material (10) eine Schiene ist.

**4.** Verfahren nach Anspruch 2,
dadurch gekennzeichnet,
daß das Verfahren in einer Vorrichtung zum Unterscheiden von Rissen in Schienen in einem Fahrzeug zum Erfassen von Rissen in Schienen per Ultraschall eingesetzt wird.

**5.** Vorrichtung zum Herauslesen von zusammenhängenden Bereichen eines B-Leuchtschirmbildes, zum Herauslesen eines zusammenhängenden Bereiches aus dem B-Leuchtschirmbild eines Reflexionsechos, das durch Ausstrahlen einer Ultraschallimpulses auf ein zu untersuchendes Material (10) erhalten wurde, mit

einer Ultraschall-Sende- und -Empfangseinheit (12) zum Ausstrahlen des Ultraschallimpulses auf das zu untersuchende Material (10) und zum Ausgeben der erfassten Empfangsdaten;
einer Berechnungseinheit (13) zum Berechnen einer Position (x, y) auf dem B-Leuchtschirmbild des erfassten Refexionsechos, nur wenn ein Reflexionsecho durch die Ultraschall-Sende- und -Empfangseinheit erfasst wird;
einer ersten Nummernzuordnungseinheit (13) zum Zuordnen der Zuordnungsnummer (i), die bereits verwendet worden ist, zu dem erfassten Reflexionsecho, falls eine Bedingung derart, daß ein Abstand zwischen der durch die Berechnungseinheit berechneten Position (x, y) auf dem B-Leuchtschirmbild des Reflexionsechos und einer Position $(x_i, y_i)$ auf dem B-Leuchtschirmbild eines Reflexionsechos, der schließlich eine Zuordnungsnummer (i), die bereits verwendet worden ist, zugeordnet wurde, innerhalb eines vorbestimmten Bereiches liegt, erfüllt ist; und
einer zweiten Nummernzuordnungseinheit (13) zum Zuordnen einer unbenutzten Zuordnungsnummer (n) zu dem erfassten Reflexionsecho, wenn die Zuordnungsnummer (i) nicht durch die erste Nummernzuordnungseinheit zugeordnet worden ist.

**6.** Vorrichtung nach Anspruch 5,
dadurch gekennzeichnet,
daß das zu untersuchende Material (10) eine Schiene ist.

**7.** Vorrichtung nach Anspruch 5,
dadurch gekennzeichnet,
daß die Vorrichtung in einer Vorrichtung zum Unterscheiden von Rissen in Schienen in einem Fahrzeug zum Erfassen von Rissen in Schienen per Ultraschall eingesetzt wird.

**Revendications**

**1.** Procédé d'extraction de région connectée d'une image d'écran B pour extraire une région connectée de l'image d'écran B d'un écho de réflexion obtenu en rayonnant une énergie d'impulsions telle qu'une onde ultrasonique, une micro-onde, une onde millimétrique, ou analogue, comprenant les étapes suivantes :

le calcul d'une position (x, y) sur l'image d'écran B dudit écho de réflexion détecté, uniquement lorsque l'écho de réflexion est détecté ;
lorsqu'une condition telle que le fait qu'une distance entre la position (x, y) sur l'image d'écran B dudit écho de réflexion détecté et une position $(x_i, y_i)$ sur l'image d'écran B de l'écho de réflexion auquel un numéro d'attribution (i) qui a déjà été utilisé a été finalement attribué se trouve à l'intérieur d'une plage prédéterminée est satisfaite, l'attribution dudit numéro d'attribution (i) qui a déjà été utilisé audit écho de réflexion détecté ; et
lorsque ledit numéro d'attribution (i) qui a déjà été utilisé n'est pas attribué audit écho de réflexion détecté selon ladite condition, l'attribution d'un numéro d'attribution inutilisé (n) audit écho de réflexion détecté.

**2.** Procédé selon la revendication 1, dans lequel ledit écho de réflexion est un écho de réflexion obtenu en rayonnant l'impulsion ultrasonique sur un matériau (10) devant être examiné.

**3.** Procédé selon la revendication 2, dans lequel ledit matériau (10) devant être examiné est un rail.

**4.** Procédé selon la revendication 2, dans lequel ledit procédé est appliqué à un dispositif de discrimination de défaut de rail dans un véhicule de détection de défauts de rail ultrasonique.

**5.** Dispositif d'extraction de région connectée d'une image d'écran B pour extraire une région connectée de l'image d'écran B d'un écho de réflexion obtenu en rayonnant une impulsion ultrasonique sur un matériau (10) devant être examiné, comprenant :

une unité d'émission et de réception ultrasonique (12) pour rayonner l'impulsion ultrasonique sur le matériau (10) devant être examiné et délivrer en sortie des données de réception reçues ;
une unité de calcul (13) pour, uniquement lorsqu'un écho de réflexion est détecté par ladite unité d'émission et de réception ultrasonique, calculer une position (x, y) sur l'image d'écran B dudit écho de réflexion détecté ;

une première unité d'attribution de numéro (13) pour, lorsqu'une condition telle que le fait qu'une distance entre la position (x, y) sur l'image d'écran B dudit écho de réflexion calculé par ladite unité de calcul et une position $(x_i, y_i)$ sur l'image d'écran B d'un écho de réflexion auquel un numéro d'attribution (i) qui a déjà été utilisé a été finalement attribué se trouve à l'intérieur d'une plage prédéterminée est satisfaite, attribuer ledit numéro d'attribution (i) qui a déjà été utilisé audit écho de réflexion détecté ; et une deuxième unité d'attribution de numéro (13) pour attribuer un numéro d'attribution inutilisé (n) audit écho de réflexion détecté lorsque le numéro d'attribution (i) n'est pas attribué par ladite première unité d'attribution de numéro.

6. Dispositif selon la revendication 5, dans lequel ledit matériau (10) devant être examiné est un rail.

7. Dispositif selon la revendication 5, dans lequel ledit dispositif est appliqué à un dispositif de discrimination de défaut de rail dans un véhicule de détection de défauts de rail ultrasonique.

FIG. 1 PRIOR ART

# FIG. 2 PRIOR ART

# F I G. 3

```
        1 2                  1 3                  1 4
  ┌─────────────┐    ┌─────────────┐    ┌─────────────┐
  │ULTRASONIC   │    │B SCOPE      │    │             │
──┤FLAW         ├───▶│IMAGE        ├───▶│DISPLAY      │
  │DETECTING    │    │PROCESSING   │    │APPARATUS    │
  │APPARATUS    │    │APPARATUS    │    │             │
  └─────────────┘    └─────────────┘    └─────────────┘
```

# FIG. 4

EP 0 798 569 B1

# F I G. 5

RECEPTION
DATA

4,0

B SCOPE
IMAGE
FORMATION
PROCESSING
UNIT

4,1

CONNECTED
REGION
EXTRACTION
PROCESSING
UNIT

# F I G. 6

# FIG. 7

INCIDENT POSITION

EP 0 798 569 B1

FIG. 8